# FASCICULE DE BREVET EUROPEEN

(11) **EP 4 066 358 B1**
(45) Date de publication et mention de la délivrance du brevet: **22.04.2026**
(21) Numéro de dépôt: 20820490.9
(22) Date de dépôt: 19.11.2020
(51) Int. Cl.: H02K 3/50, H02K 15/00, H02K 15/04

(54) **STATOR DE MACHINE ÉLECTRIQUE TOURNANTE AVEC BOBINAGE ASYMÉTRIQUE**
STATOR EINER ROTIERENDEN ELEKTRISCHEN MASCHINE MIT ASYMMETRISCHER WICKLUNG
ROTARY ELECTRIC MACHINE STATOR WITH ASYMMETRIC WINDING

(30) Priorité: 26.11.2019 FR 1913234
(43) Date de publication de la demande: 05.10.2022
(73) Titulaire: Nidec PSA Emotors, 78955 Carrières sous Poissy (FR)
(72) Inventeur: MOYA, Cyril, 78400 Chatou (FR)
(74) Mandataire: VATD
(86) Numéro de dépôt international: PCT/FR2020/052131
(87) Numéro de publication internationale: WO 2021/105593

(56) Documents cités:
- EP-A2- 1 971 011
- WO-A1-2019/062915
- US-A1- 2013 300 246
- US-B2- 9 496 773

## Description

La présente invention concerne les machines électriques tournantes et plus particulièrement les stators de telles machines.

### Domaine technique

L'invention porte plus particulièrement sur les machines synchrones ou asynchrones, à courant alternatif. Elle concerne notamment les machines de traction ou de propulsion de véhicules automobiles électriques *(Battery Electric Vehicle)* et/ou hybrides *(Hybrid Electric Vehicle - Plug-in Hybrid Electric Vehicle),* telles que voitures individuelles, camionnettes, camions ou bus. L'invention s'applique également à des machines électriques tournantes pour des applications industrielles et/ou de production d'énergie, notamment navales, aéronautiques ou éoliennes.

Dans la demande internationale WO 2019/062915, les portions de soudage les plus extérieures des conducteurs électriques sont inclinées avec une même inclinaison, et les portions de soudages les plus intérieures sont inclinées avec une même inclinaison.

La demande EP 1 971 011 décrit un bobinage de stator dans lequel la tête de bobine d'un U-pin comporte deux portions inclinées respectivement d'un angle θ1 ou θ2, dont l'un est plus grand que l'autre, afin de réduire la résonance totale en décalant les résonances respectives de chacune des portions. Rien n'est dit quant à la position des portions de soudure par rapport à l'axe, ni à leurs inclinaisons respectives.

Le brevet US 9 496 773 porte sur le fait que les portions qui sont soudées ont subi une déformation plastique. Cependant, rien n'est dit quant aux portions obliques précédant les portions de soudure, et notamment ni à leur position par rapport à l'axe, ni à leurs inclinaisons respectives.

Enfin, dans la demande US 2013/300246, on ne voit que les portions obliques d'un seul U-pin. Rien n'est dit quant à la position de ces portions par rapport à l'axe, ni à leurs inclinaisons respectives.

Il existe un besoin pour bénéficier d'un stator de machine électrique tournante d'assemblage aisé permettant un remplissage efficace des encoches, tout en assurant des performances électromagnétiques satisfaisantes.

Il existe encore un besoin pour réduire le coût de fabrication des machines électriques, notamment en simplifiant le bobinage du stator, par exemple en minimisant le nombre de pièces à utiliser.

Il existe également un besoin pour améliorer encore les stators de machines électriques et notamment diminuer les ondulations de couple et les pertes Joule AC par courants induits, les vibrations et le bruit électromagnétique.

### Exposé de l'invention

### Stator

L'invention vise à répondre à tout ou partie de ces besoins et elle y parvient, selon l'un de ses aspects, grâce à un stator de machine électrique tournante, comportant une masse statorique comportant des encoches ménagées entre des dents, des conducteurs électriques étant logés dans les encoches, au moins une partie des conducteurs électriques, voire une majorité des conducteurs électriques, étant en forme d'épingle en U, comportant chacun des première et seconde jambes s'étendant axialement respectivement dans des première A et seconde R encoches, au moins une des première et seconde jambes des conducteurs électriques se prolongeant hors des encoches par une portion de soudage inclinée par rapport à un plan perpendiculaire à un axe longitudinal du stator pour venir en surplomb de la masse statorique circonférentiellement au niveau d'une encoche ou d'une dent, cette encoche ou dent étant séparées de la première A ou de la seconde R encoche respectivement par un nombre N1 et/ou N2 de dents, au moins une partie des conducteurs électriques ayant chacun une portion de soudage la plus intérieure par rapport à l'axe longitudinal du stator, voire une majorité, mieux tous les conducteurs électriques ayant chacun une portion de soudage la plus intérieure par rapport à l'axe longitudinal du stator, lesdites portions de soudage les plus intérieures étant inclinées avec une même inclinaison par rapport au plan perpendiculaire à l'axe longitudinal du stator, le stator comportant deux conducteurs électriques par encoche.

Les nombre N1 et N2 peuvent être égaux ou différents.

Les première A et seconde R encoches sont séparées par un nombre Nd de dents.

Le nombre Nd de dents est de préférence le même pour tous les conducteurs électriques en forme d'épingle en U du stator. On peut également parler pour le nombre Nd de dents de pas d'un conducteur électrique, qui est dans l'invention le même pour tous les conducteurs électriques du stator qui sont en forme d'épingle en U. On facilite ainsi la fabrication des épingles en U, et on simplifie l'étape de positionnement de celles-ci dans la masse statorique, notamment leur insertion.

Compte tenu de l'écartement constant entre les jambes de tous les conducteurs électriques, l'invention permet de diminuer la hauteur des chignons du côté opposé aux soudures, ce qui est avantageux pour minimiser l'encombrement de la machine et la quantité de matériau, notamment de cuivre, nécessaire pour les conducteurs électriques. On a ainsi une meilleure compacité du stator, y compris lorsqu'il est assemblé, donc de la machine résultante, qui peut notamment être plus courte. L'arbre du rotor peut être plus court, le carter peut être plus court, l'intégration de la machine dans son environnement d'utilisation peut être facilitée. Enfin, la masse globale de la machine peut être minimisée.

D'autre part, l'écartement entre chacun des chignons est plus régulier, ce qui peut permettre de minimiser les risques de contact entre eux, et ainsi de permettre de supprimer l'étape de recouvrement de ceux-ci par un isolant.

Par ailleurs, l'invention permet de diminuer le nombre de forme d'épingles à utiliser dans un même stator. Ainsi, la fabrication du stator peut en être accélérée, avec moins d'étapes de fabrication. On simplifie la fabrication, l'espace nécessaire ainsi que l'outillage à utiliser.

Enfin, l'invention permet de libérer de l'espace de part et d'autre des épingles en sortie d'encoche, ce qui peut permettre d'y positionner les connexions aux autres phases ou vers un onduleur, notamment du côté de la culasse du stator. L'espacement entre les épingles en sortie d'encoche peut être dans un mode de réalisation, constant ou sensiblement constant. Cela peut faciliter la réalisation des soudures d'une part, et du refroidissement des conducteurs électriques d'autre part.

Dans l'invention, N1 peut varier de Nd/2 - 0,5 à Nd dents, et N2 peut varier de 0 à Nd/2 + 1,5 dents.

Dans un exemple de réalisation, N1 est égal à Nd ou Nd + 1 et N2 est égale à 0 ou 1.

Dans un autre exemple de réalisation, N1 et N2 sont égaux ou presque égaux. N1 et N2 peuvent être chacun égal à l'un de Nd/2 ou Nd/2 + 0,5 ou Nd/2 - 0,5 ou Nd/2 +/-1 ou Nd/2 + 1,5.

Dans un mode de réalisation, on a la portion de soudage de la seconde jambe du conducteur électrique qui est alignée avec celle-ci. Dans ce cas, on a N2 qui est nul.

Dans les autres cas où N2 est non nul, on a chacune des première et seconde jambes des conducteurs électriques qui peuvent se prolonger hors des encoches par une portion de soudage inclinée par rapport à un plan perpendiculaire à un axe longitudinal du stator pour venir en surplomb de la masse statorique circonférentiellement au niveau d'une encoche ou d'une dent, cette encoche étant séparées de la première A ou de la seconde R encoche respectivement par un nombre N1 et N2 de dents, les nombre N1 et N2 pouvant être égaux ou différents.

Lorsque N1 et N2 sont égaux ou presque égaux, la compacité du stator peut être encore améliorée.

Les deux portions de soudage de chacune des première et seconde jambes des conducteurs électriques peuvent être orientées en éloignement l'un de l'autre, ce qui peut notamment être le cas lorsque le bobinage est ondulé. En variante, elles peuvent être orientées dans le même sens, ce qui peut notamment être le cas lorsque le bobinage est imbriqué.

L'invention a également pour objet, selon un autre de ses aspects, un stator de machine électrique tournante, comportant une masse statorique comportant des encoches, des conducteurs électriques logés dans les encoches, au moins une partie des conducteurs électriques, voire une majorité des conducteurs électriques, étant en forme d'épingle en U, comportant chacun des première et seconde jambes s'étendant axialement respectivement dans des première A et seconde R encoches, les première A et seconde R encoches étant séparées par un nombre Np d'encoches. Le nombre Np d'encoches est le même pour tous les conducteurs électriques en forme d'épingle en U du stator.

On peut également parler pour le nombre Np d'encoches de pas d'un conducteur électrique, qui est dans l'invention le même pour tous les conducteurs électriques du stator qui sont en forme d'épingle en U. On facilite ainsi la fabrication des épingles en U, et on simplifie l'étape de positionnement de celles-ci dans la masse statorique, notamment leur insertion.

Au moins une des première et seconde jambes des conducteurs électriques peut se prolonger hors des encoches par une portion de soudage inclinée par rapport à un plan perpendiculaire à un axe longitudinal du stator pour venir en surplomb de la masse statorique circonférentiellement au niveau d'une encoche, cette encoche étant séparées de la première A ou de la seconde R encoche respectivement par un nombre N1 et/ou N2 de dents. Les nombre N1 et N2 peuvent être égaux ou différents.

Dans un mode de réalisation, N1 peut varier de Np/2 - 0,5 à Np encoches, et N2 peut varier de 0 à Np/2 + 0,5 encoches. Dans un exemple de réalisation, N1 est égal à Np et N2 est égale à 0. Dans un autre exemple de réalisation, N1 et N2 sont égaux, étant égale à Np/2 ou Np/2 + 0,5 ou Np/2 - 0,5.

Dans un mode de réalisation, on a la portion de soudage de la seconde jambe du conducteur électrique qui est alignée avec celle-ci. Dans ce cas, on a N2 qui est nul.

Dans les autres cas où N2 est non nul, on a chacune des première et seconde jambes des conducteurs électriques qui peuvent se prolonger hors des encoches par une portion de soudage inclinée par rapport à un plan perpendiculaire à un axe longitudinal du stator pour venir en surplomb de la masse statorique circonférentiellement au niveau d'une encoche, cette encoche étant séparées de la première A ou de la seconde R encoche respectivement par un nombre N1 et N2 de dents, les nombre N1 et N2 pouvant être égaux ou différents.

### Jambes des épingles

Au moins une partie des conducteurs électriques ont chacun une portion de soudage la plus intérieure par rapport à l'axe longitudinal du stator, voire une majorité, mieux tous les conducteurs électriques ont chacun une portion de soudage la plus intérieure par rapport à l'axe longitudinal du stator.

Au moins une partie des conducteurs électriques ont chacun une portion de soudage la plus extérieure par rapport à l'axe longitudinal du stator, voire une majorité, mieux tous les conducteurs électriques ont chacun une portion de soudage la plus extérieure par rapport à l'axe longitudinal du stator.

Les portions intérieures sont disposées plus près du rotor que les portions extérieures.

Dans l'invention, les portions de soudage les plus intérieures sont inclinées avec une même inclinaison par rapport au plan perpendiculaire à l'axe longitudinal du stator. Ces portions de soudages les plus intérieures s'étendent toutes parallèlement entre elles.

En ce qui concerne les portions de soudage les plus extérieures, elles ne sont pas nécessairement toutes inclinées avec une même inclinaison par rapport au plan perpendiculaire à l'axe longitudinal du stator. Elles peuvent être inclinées avec au moins deux, voire trois ou quatre, inclinaisons différentes par rapport au plan perpendiculaire à l'axe longitudinal du stator.

La première jambe peut être disposée plus près du rotor que la seconde jambe. La seconde jambe peut être disposée plus près de la culasse du stator que la première jambe. En variante, la première jambe peut être disposée plus près de la culasse du stator que la seconde jambe, et la seconde jambe peut être disposée plus près du rotor que la première jambe.

Au moins une partie des conducteurs électriques peuvent avoir une seconde jambe se prolongeant hors de l'encoche par une portion de soudage s' étendant dans un même plan radial que la seconde jambe, voir étant alignée avec celle-ci. Lorsque seule la première jambe des conducteurs électriques a une portion de soudage inclinée, la fabrication du stator en est facilitée, dans la mesure où les opérations d'inclinaisons des épingles peuvent être simplifiées et accélérées. Dans cette configuration, une seule des jambes du conducteur électrique est inclinée, de sorte que l'on peut ainsi limiter les déformations et les contraintes sur les conducteurs électriques. On peut notamment réduire ainsi les risques de contact électrique entre les phases du bobinage du stator.

Dans un mode de réalisation, seule la première jambe des conducteurs électriques a une portion de soudage inclinée. La portion de soudage de la seconde jambe peut être alignée avec la seconde jambe, s'étendant dans le prolongement de celle-ci et étant rectiligne avec celle-ci. Lorsque seule la première jambe des conducteurs électriques a une portion de soudage inclinée, la première jambe peut être disposée plus près du rotor que la seconde jambe. En variante, la première jambe inclinée peut être disposée plus près de la culasse du stator que la seconde jambe.

Au moins une partie des conducteurs électriques peuvent avoir une seconde jambe se prolongeant hors de l'encoche par une portion de soudage faisant un décrochement par rapport à l'encoche, tout en s'étendant dans un même plan radial que la seconde jambe. Le décrochement du conducteur électrique peut permettre d'atteindre des éléments métalliques d'un connecteur de phases. Les éléments métalliques peuvent être disposés radialement extérieurement par rapport aux conducteurs électriques auxquels ils sont connectés.

Au moins une partie des conducteurs électriques peuvent avoir une seconde jambe se prolongeant hors de l'encoche par une portion de soudage s'étendant circonférentiellement.

Au moins une partie des conducteurs électriques peuvent avoir une seconde jambe se prolongeant hors de l'encoche par une portion de soudage s'étendant en dehors d'une surface circonférentielle. Ces portions de soudage en dehors d'une surface circonférentielle peuvent permettre d'atteindre un connecteur de phase qui peut être disposé autour des portions de soudage, plutôt qu'au-dessus, relativement à un axe longitudinal du stator.

Les conducteurs électriques peuvent former un bobinage distribué. Le bobinage peut être ondulé ou imbriqué. Les conducteurs électriques peuvent former un bobinage fractionnaire. Le bobinage peut être à pas plein. Dans un mode de réalisation, le bobinage peut être à pas raccourci.

### Bobinage multiphasé

Les conducteurs électriques logés dans les encoches peuvent former un bobinage multiphasé ayant au moins une première phase a et une deuxième phase b, un conducteur électrique d'entrée A de la première phase a étant située dans une première encoche (numéro d'encoche 1), un ou plusieurs conducteurs électriques de la deuxième phase b étant situés dans une deuxième encoche (numéro d'encoche 2), la deuxième encoche suivant immédiatement la première encoche quand on se déplace circonférentiellement autour de l'axe de rotation de la machine, dans le sens de circulation du courant électrique autour de l'axe de rotation de la machine
Le conducteur électrique d'entrée de la première phase est dans ce cas situé dans une première encoche juste avant une deuxième encoche recevant un ou plusieurs conducteurs électriques de la deuxième phase, quand on se déplace circonférentiellement autour de l'axe de rotation de la machine, dans le sens de circulation du courant électrique autour de l'axe de rotation de la machine.

Ainsi, le conducteur électrique d'entrée de la première phase est situé à l'opposé de la position habituelle, à savoir une position dans laquelle la première encoche recevant le conducteur électrique d'entrée de la première phase est suivie immédiatement par une deuxième encoche recevant un ou plusieurs conducteurs électriques de la même première phase, quand on se déplace circonférentiellement autour de l'axe de rotation de la machine, dans le sens de circulation du courant électrique autour de l'axe de rotation de la machine.

L'encoche d'entrée d'une première phase peut être suivie d'une encoche logeant des conducteurs électriques d'une deuxième phase différente de la première.

Ainsi, le nombre d'encoche entre le conducteur électrique d'entrée et le conducteur électrique de sortie d'une même phase est diminué. La première encoche d'entrée d'une phase peut être rapprochée d'une troisième encoche de sortie de cette même phase. Autrement dit, le nombre d'encoches séparant la première encoche d'entrée d'une phase et la troisième encoche de sortie de la même phase peut être plus petit. Ainsi, la mise en œuvre de l'invention permet de réduire le pas dentaire des conducteurs électriques qui servent à connecter les différentes voies de bobinage qui progresse dans le même sens autour de l'axe de rotation de la machine, et la longueur moyenne de chaque phase grâce à une meilleure imbrication des sous-ensembles de conducteurs électriques constituant le bobinage, mesurée circonférentiellement autour de l'axe de rotation de la machine. Le raccourcissement de la longueur moyenne d'une phase permet d'améliorer la résistance linéaire et les performances thermiques, et de réduire la masse de cuivre nécessaire.

On peut également obtenir pour les conducteurs électriques des têtes de chignon de hauteur moindre, du côté opposé aux soudures. La quantité de cuivre nécessaire à la fabrication des conducteurs est donc diminué, ce qui est avantageux économiquement. En outre, l'insertion des conducteurs électriques dans les encoches peut être facilitée.

Par ailleurs, un conducteur électrique de sortie de la première phase peut être située dans une première encoche, un ou plusieurs conducteurs électriques de la deuxième phase étant situés dans une deuxième encoche, la deuxième encoche suivant immédiatement la première encoche quand on se déplace circonférentiellement autour de l'axe de rotation de la machine, dans le sens de circulation du courant électrique autour de l'axe de rotation de la machine.

Le conducteur électrique de sortie de la première phase peut être situé dans une première encoche juste avant une deuxième encoche recevant un ou plusieurs conducteurs électriques de la deuxième phase, quand on se déplace circonférentiellement autour de l'axe de rotation de la machine, dans le sens de circulation du courant électrique autour de l'axe de rotation de la machine.

Ainsi, le conducteur électrique de sortie de la première phase est situé à l'opposé de la position habituelle, à savoir une position dans laquelle la première encoche recevant le conducteur électrique de sortie de la première phase est suivie immédiatement par une deuxième encoche recevant un ou plusieurs conducteurs électriques de la même première phase, quand on se déplace circonférentiellement autour de l'axe de rotation de la machine, dans le sens de circulation du courant électrique autour de l'axe de rotation de la machine.

L'encoche de sortie d'une première phase peut être suivie d'une encoche logeant des conducteurs électriques d'une deuxième phase différente de la première.

Les entrées de phases peuvent être décalées d'un angle de 30°, 60°, 90 ou d'un angle de 120° par exemple.

La deuxième encoche peut comporter un ou plusieurs conducteurs électriques d'une même phase uniquement.

La première encoche d'entrée d'une première phase peut comporter un ou des conducteurs électriques de la première phase uniquement.

En variante, la première encoche d'entrée d'une première phase peut comporter un ou des conducteurs électriques de la première phase et un ou des conducteurs électriques de la deuxième phase. Le ou les conducteurs électriques de la première phase peuvent être placés du côté de la culasse ou en variante du côté de l'entrefer. Le ou les conducteurs électriques de la deuxième phase peuvent être placés du côté de l'entrefer ou en variante du côté de la culasse. Les entrées et sorties de phases peuvent être placées du côté de la culasse ou en variante du côté de l'entrefer.

Au moins un premier conducteur électrique logé dans une première encoche peut être relié électriquement à un deuxième conducteur électrique logé dans une deuxième encoche, à la sortie desdites encoches.

Tous les conducteurs électriques ayant une extrémité libre située à une même position circonférentielle autour de l'axe de rotation de la machine, quelle que soit leur position radiale, peuvent être reliés électriquement ensemble.

Le stator peut comporter un connecteur de phases comportant des éléments métalliques connectés à des conducteurs électriques du stator. Les éléments métalliques peuvent être disposés radialement extérieurement ou intérieurement par rapport aux conducteurs électriques auxquels ils sont connectés. Les éléments métalliques connectés à des conducteurs des bobinages du stator peuvent être maintenus par un support isolant. Par ailleurs, le connecteur de phases peut présenter des pattes de connexion à un bus d'alimentation. La machine peut ainsi être reliée à un onduleur, connecté électriquement aux pattes de connexion du connecteur.

### Epingles

Des conducteurs électriques au moins, voir une majorité des conducteurs électriques, peuvent être en forme d'épingles, de U ou de I. L'épingle peut être en forme de U *(« U-pin »* en anglais) ou droite, étant en forme de I (« *I-pin* » en anglais).

Les conducteurs électriques en épingle et méplat permettent d'augmenter le coefficient de remplissage de l'encoche, rendant la machine plus compacte. Grâce à un coefficient de remplissage élevé, les échanges thermiques entre les conducteurs électriques et la masse statorique sont améliorés, ce qui permet de réduire la température des conducteurs électriques à l'intérieur des encoches.

En outre, la fabrication du stator peut être facilitée grâce aux conducteurs électriques en forme d'épingles. Enfin, les épingles ne nécessitant pas d'avoir des encoches ouvertes, on peut avoir des encoches fermées qui permettent de tenir les épingles et on peut donc ainsi supprimer l'étape d'insertion des cales du stator.

Des conducteurs électriques, voire une majorité des conducteurs électriques, s'étendent axialement dans les encoches. Les conducteurs électriques peuvent être introduits dans les encoches correspondantes par l'une ou les deux extrémités axiales de la machine.

Un conducteur électrique en forme de I a deux extrémités axiales chacune placées à l'une des extrémités axiales du stator. Il passe dans une encoche unique, et peut être soudé à chacune de ses extrémités axiales à deux autres conducteurs électriques, au niveau des extrémités axiales du stator. Le stator peut par exemple comporter 6, 10, 12, 14, 18, 22 ou 26 conducteurs électriques en forme de I**,** les autres conducteurs électriques pouvant tous être en forme de U.

Le stator peut être dépourvu de conducteur électrique en forme de I.

Un conducteur électrique en forme de U a deux extrémités axiales toutes deux placées à l'une des extrémités axiales du stator. Ces deux extrémités axiales sont définies par les deux jambes du U. Il passe dans deux encoches différentes, et peut être soudé à chacune de ses extrémités axiales à deux autres conducteurs électriques, au niveau d'un même côté axial du stator. Le bas du U, c'est-à-dire le côté du U formant le chignon ou tête de bobine, est disposé de l'autre côté axial du stator.

Au moins une partie des conducteurs électriques, voire une majorité des conducteurs électriques, peuvent être en forme d'épingle en U.

En outre, l'encombrement des conducteurs électriques au niveau des têtes de bobines est diminué. Cela facilite l'imbrication des conducteurs électriques.

Le bobinage peut être dépourvu d'épingle en U d'une largeur différente de Np. Dans certaine réalisation de l'art antérieur, on a des épingles en U de trois largeurs différentes au moins. La largeur d'une épingle en U est égale au nombre de pas dentaire + 1. On définit la largeur d'une épingle en U par le nombre d'encoche séparant les premières et seconde jambes de l'épingle en U, y compris les deux encoches logeant les deux jambes de l'épingle en U considérée. Les premières et seconde jambes peuvent être séparées par un nombre d'encoches compris entre 3 et 20, mieux entre 6 et 16, étant par exemple de 6,7, 8, 9 ou 10 ou 11 encoches.

### Brins

Dans l'invention, chaque conducteur électrique peut comporter un ou plusieurs brins (« *wire »* ou « *strand* » en anglais). Par « brin », on entend l'unité la plus élémentaire pour la conduction électrique. Un brin peut être de section transversale ronde, on peut alors parler de 'fil', ou en méplat. Les brins en méplat peuvent être mis en forme en épingles, par exemple en U ou en I. Chaque brin est revêtu d'un émail isolant.

Le fait que chaque encoche puisse comporter plusieurs conducteurs et/ou plusieurs brins permet de minimiser les pertes par courants induits, ou pertes Joule AC, lesquelles évoluent avec le carré de la fréquence d'alimentation, ce qui est particulièrement avantageux à haute fréquence et lorsque la vitesse de fonctionnement est élevée. Le transfert thermique vers la source froide en est également facilité. On peut ainsi obtenir un meilleur rendement à haute vitesse.

Lorsque les encoches sont fermées, on peut obtenir une réduction des flux de fuites vu par les conducteurs, ce qui entraîne une diminution des pertes par courants de Foucault dans les brins.

Dans un mode de réalisation, chaque conducteur électrique peut comporter plusieurs épingles, chacune formant un brin, comme explicité ci-dessus. Tous les brins d'un même conducteur électrique peuvent être reliés électriquement les uns aux autres à la sortie de l'encoche. Les brins reliés électriquement les uns aux autres sont placés en court-circuit. Le nombre de brins reliés électriquement ensemble peut être supérieur ou égal à 2, étant par exemple compris entre 2 et 12, étant par exemple de 3, 4, 6 ou 8 brins.

Plusieurs brins peuvent former un même conducteur électrique. Un même courant électrique d'une même phase circule dans l'ensemble des brins d'un même conducteur électrique. Tous les brins d'un même conducteur électrique peuvent être reliés électriquement les uns aux autres, notamment à la sortie de l'encoche. Tous les brins d'un même conducteur électrique peuvent être reliés électriquement les uns aux autres à chacune de leurs deux extrémités axiales, notamment à la sortie de l'encoche. Ils peuvent être reliées électriquement en parallèle.

Tous les brins de tous les conducteurs électriques ayant une extrémité libre situées à une même position circonférentielle autour de l'axe de rotation de la machine, quelle que soit leur position radiale, peuvent être reliés électriquement les uns aux autres.

Dans un mode de réalisation, chaque conducteur électrique comporte un seul brin. Dans un autre mode de réalisation, chaque conducteur électrique comporte trois brins.

Une encoche comporte deux conducteurs électriques, une encoche peut donc loger deux brins, ou en variante six brins, par exemple, répartis entre les deux conducteurs électriques.

Les brins peuvent être positionnés dans l'encoche de façon que leur dimension circonférentielle autour de l'axe de rotation de la machine soit supérieure à leur dimension radiale. Une telle configuration permet une réduction des pertes par courants de Foucault dans les brins.

Un brin peut avoir une largeur comprise entre 1 et 5 mmm, étant par exemple de l'ordre de 2,5 ou 3 mm. La largeur d'un brin est définie comme sa dimension dans la direction circonférentielle autour de l'axe de rotation de la machine.

Un brin peut avoir une hauteur comprise entre 1 et 5 mm, étant par exemple de l'ordre de 1,6 ou 1,8 mm. La hauteur d'un brin est définie comme son épaisseur dans la dimension radiale.

Les conducteurs électriques peuvent être réalisés en cuivre ou aluminium.

### Bobinage

Un bobinage est constitué d'un nombre de phases *m* décalées dans l'espace de telle façon que lorsqu'elles sont alimentées par un système de courant multi-phasés, elles produisent un champ tournant.

Les conducteurs électriques peuvent former un bobinage unique, notamment à pas entier ou fractionnaire. Par « bobinage unique », on entend que les conducteurs électriques sont reliés électriquement ensemble dans le stator, et que les connexions entre les phases sont faites dans le stator, et non pas à l'extérieur du stator, par exemple dans une boite à bornes.

Les conducteurs électriques peuvent former un bobinage distribué. Le bobinage n'est pas concentré ou bobiné sur dent.

Le bobinage peut être à pas plein. Chaque encoche ne loge que des conducteurs électriques d'une même phase et/ou la largeur d'un conducteur électrique est égale au nombre d'encoches divisé par le nombre de pôles.

En variante, le bobinage peut être à pas raccourci. Des encoches peuvent loger des conducteurs électriques de phases différentes. Dans un mode de réalisation, au moins une encoche loge un conducteur électrique de la première phase et un conducteur électrique de la deuxième phase et/ou la largeur de la majorité des conducteurs électriques est inférieure au nombre d'encoches divisé par le nombre de pôles.

Le bobinage est dans l'invention entier ou fractionnaire. Le bobinage peut être entier à pas avec ou sans raccourcissement, ou en variante fractionnaire. Dans un mode de réalisation, les conducteurs électriques forment un bobinage fractionnaire.

Pour un bobinage fractionnaire, le nombre d'encoches par pôle et par phase est fractionnaire, c'est-à-dire que le rapport *q* défini par *q=Ne*/(*2pm*) s'écrit sous la forme d'une fraction irréductible *z*/*n*, *z* et *n* étant deux nombres entiers non nuls, *n* étant différent de 1, où Ne est le nombre d'encoches du stator, *m* le nombre de phases du bobinage et *p* le nombre de paires de pôles du stator.

Le nombre d'encoches du stator peut être compris entre 18 et 96, mieux entre 30 et 84, étant par exemple de 18, 24, 27, 30, 36, 42, 45, 48, 54, 60, 63, 72, 78, 81, 92, 96, mieux étant de 60 ou 63. Le nombre de pôles du stator peut être compris entre 2 et 24, voire entre 4 et 12, étant par exemple de 6 ou de 8.

La combinaison nombre d'encoches/nombre de pôles du stator peut être choisie parmi les combinaisons de la liste suivante, qui n'est pas limitative : 30/4, 42/4, 45/6, 48/8, 63/6, 60/8, 78/8, 84/8.

Dans un mode de réalisation, la combinaison nombre d'encoches/nombre de pôles du stator est 60/8. On a dans ce cas q=60/(2*4*3)=5/2.

Dans un mode de réalisation, la combinaison nombre d'encoches/nombre de pairs de pôles du stator est 63/6 ou On a dans ce cas q=63/(2*3*3)=7/2.

Plus largement, la combinaison entre le nombre d'encoches Ne et le nombre de paires de pôles *p* du stator peut être l'une de celles cochées dans le tableau 1 suivant, pour un bobinage triphasé.

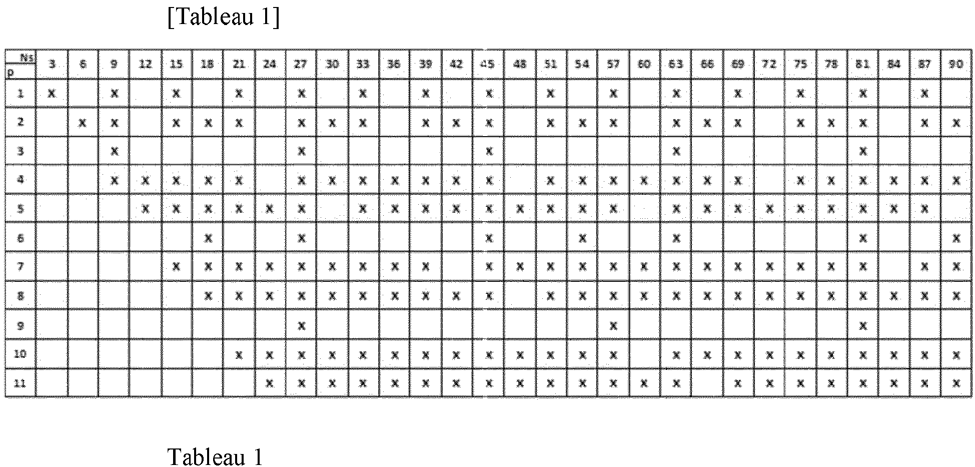

Le nombre de phase est dans ce cas de trois, mais on ne sort pas du cadre de la présente invention si le nombre de phase est différent, étant par exemple de deux, la machine comportant alors un bobinage biphasé, ou étant par exemple de 5, 6 ,7 9, 11 ou 13 Le bobinage est polyphasé.

La mise en série des conducteurs électriques peut être faite en bobinage dit ondulé ou en bobinage dit imbriqué.

Par « bobinage ondulé », on entend un bobinage dans lequel les conducteurs électriques d'une même phase et d'un même pôle sont reliés électriquement l'un à l'autre de façon que, pour une voie d'enroulement, le courant électrique de la phase circule dans les conducteurs électriques en tournant autour de l'axe de rotation de la machine toujours dans un seul sens. Pour une voie d'enroulement, les conducteurs électriques d'une même phase et d'un même pôle ne se chevauchent pas lorsqu'observés perpendiculairement à l'axe de rotation de la machine.

Par « bobinage imbriqué », on entend un bobinage dans lequel les conducteurs électriques d'une même phase d'un même pole sont reliés électriquement l'un à l'autre de façon que le courant électrique de la phase circule dans les conducteurs électriques en tournant autour de l'axe de rotation de la machine alternativement dans un sens puis dans l'autre. Pour une voie d'enroulement, les conducteurs électriques d'une même phase et d'un même pôle se chevauchent lorsqu'observés perpendiculairement à l'axe de rotation de la machine.

Le bobinage peut comporter une seule voie d'enroulement ou plusieurs voies d'enroulement. Dans un « conducteur électrique » circule le courant d'une même phase par voie d'enroulement. Par « voie d'enroulement », on entend l'ensemble des conducteurs électriques de la machine qui sont parcourus par un même courant électrique d'une même phase. Ces conducteurs électriques peuvent être connectés entre eux en série ou en parallèle ou en série-parallèle. Dans le cas où on a une seule voie, les conducteurs électriques sont connectés en série. Dans le cas où on a plusieurs voies, les conducteurs électriques de chaque voie sont connectés en série, et les voies sont connectés en parallèle.

### Conducteurs électriques

Dans un « conducteur électrique » circule le courant d'une même phase d'une voie d'enroulement. Plusieurs conducteurs en série forment une « bobine » *(« coil »* en anglais). Le nombre de bobines par phase est au maximum égal au nombre de pôles du stator ou au nombre de paires de pôles.

Dans chaque encoche, il peut y avoir une ou plusieurs couches. Par « couche » (« *layer* » en anglais), on désigne les conducteurs en série appartenant à une même phase disposés dans une même encoche. Dans chaque couche d'une encoche, il y a les conducteurs électriques d'une même phase. De manière générale, les conducteurs électriques d'un stator peuvent être réparties en une couche ou en deux couches. Lorsque les conducteurs électriques sont repartis en une seule couche, chaque encoche ne loge que des conducteurs électriques d'une même phase.

Dans l'invention, les conducteurs électriques peuvent être répartis en deux couches seulement. Dans ce cas, une ou des encoches peuvent loger des conducteurs électriques de deux phases différentes. C'est toujours le cas pour un bobinage à pas raccourci. Dans un mode de réalisation, le bobinage peut ne pas comporter plus de deux couches. Dans un mode de réalisation, il est notamment dépourvu de quatre couches.

Au moins un premier conducteur électrique logé dans une première encoche peut être relié électriquement à un deuxième conducteur électrique logé dans une deuxième encoche, à la sortie desdites encoches.

Par « reliés électriquement », on entend tout type de liaison électrique, notamment par soudure, avec différentes méthodes de soudures possible, notamment laser, induction, friction, ultrasons, vibrations, ou brasure, ou par serrage mécanique, notamment par sertissage, vissage ou rivetage par exemple. L'étape de soudure peut être mise en œuvre au moyen d'une source de chaleur, notamment un laser ou un arc électrique, par exemple un arc électrique produit au moyen d'une électrode de tungstène. Le procédé de soudure utilisant une électrode de tungstène peut être une soudure TIG (en anglais « Tungsten Inert Gas »). Dans ce procédé de soudure, l'arc électrique est produit à partir d'une électrode de tungstène et d'un plasma. L'utilisation d'une source de chaleur permet de réaliser la fusion des extrémités libres des brins sans dégrader l'assemblage des brins du ou des conducteurs. On peut utiliser une seule source de chaleur pour réaliser une même soudure. En variante, on peut utiliser plusieurs sources de chaleur pour réaliser une même soudure.

Les premier et deuxième conducteurs électriques peuvent être reliés électriquement à la sortie des encoches, c'est-à-dire que la liaison électrique est formée sur les conducteurs électriques juste après leur sortie des deux encoches, à une extrémité axiale de la masse statorique. La liaison électrique peut être faite dans un plan perpendiculaire à l'axe de rotation de la machine. Le plan de la liaison électrique peut être éloigné de la masse statorique de 30 à 70 mm environ, mieux de de 40 à 60 mm environ.

Les conducteurs électriques peuvent être disposés dans les encoches de manière répartie. Par « répartie », il faut comprendre que les conducteurs électriques de départ et de retour sont logés chacun dans des encoches différentes et non consécutives. Au moins l'un des conducteurs électriques peut passer successivement dans deux encoches non consécutives.

Les conducteurs électriques peuvent être disposés de manière rangée dans les encoches. Par « rangée », on entend que les conducteurs électriques ne sont pas disposés dans les encoches en vrac mais de manière ordonnée. Ils sont empilés dans les encoches de manière non aléatoire, étant par exemple disposés selon une rangée de conducteurs électriques alignés dans la direction radiale.

Les conducteurs électriques peuvent être en section transversale de forme générale rectangulaire, notamment avec des arêtes arrondies. La dimension circonférentielle d'un conducteur électrique peut correspondre sensiblement à la largeur d'une encoche. Ainsi, une encoche peut ne comporter dans sa largeur qu'un seul conducteur électrique. La largeur de l'encoche est mesurée dans sa dimension circonférentielle autour de l'axe de rotation de la machine.

Les conducteurs électriques peuvent être adjacents les uns aux autres par leurs grands côtés, autrement appelé le plat.

L'optimisation de l'empilement peut permettre de disposer dans les encoches une plus grande quantité de conducteurs électriques.

Le stator peut comporter un capteur pour mesure la température des conducteurs électriques, par exemple un thermocouple. Le capteur peut être disposé dans l'encoche, ou en variante au niveau des portions de soudage.

Au moins une dent, mieux toutes les dents, peuvent être en section transversale de forme générale trapézoïdale. Au moins une dent, mieux toutes les dents, peuvent avoir des bords divergents lorsque l'on s'éloigne de l'axe de rotation de la machine.

La masse statorique peut être réalisée par empilement de tôles. Les dents sont reliées entre elles par des ponts de matière, et du côté opposé par une culasse. Les encoches fermées peuvent être réalisées entièrement par découpage dans les tôles. Chaque tôle de l'empilement de tôles peut être monobloc.

Chaque tôle est par exemple découpée dans une feuille d'acier magnétique ou contenant de l'acier magnétique, par exemple de l'acier de 0,1 à 1,5 mm d'épaisseur. Les tôles peuvent être revêtues d'un vernis isolant électrique sur leurs faces opposées avant leur assemblage au sein de l'empilement. L'isolation électrique peut encore être obtenue par un traitement thermique des tôles, le cas échéant.

En variante, la masse statorique peut être fabriquée à partir d'une poudre magnétique compactée ou agglomérée.

### Machine et rotor

L'invention a encore pour objet une machine électrique tournante, tel qu'un moteur synchrone ou une génératrice synchrone, comportant un stator tel que défini précédemment. La machine peut être synchrone ou asynchrone. La machine peut être à reluctance. Elle peut constituer un moteur synchrone.

La vitesse maximale de rotation de la machine peut être élevée, étant par exemple supérieure à 10 000 tr/min, mieux supérieure à 12 000 tr/min, étant par exemple de l'ordre de 14 000 tr/min à 15 000 tr/min, voire même de 20 000 tr/min ou de 25 000 tr/min. La vitesse maximale de rotation de la machine peut être inférieure à 100 000 tr/min, voire à 60 000 tr/min, voire encore inférieure à 40 000 tr/min, mieux inférieure à 30 000 tr/min.

La machine électrique tournante peut comporter un rotor. Le rotor peut être à aimants permanents, avec des aimants surfaciques ou enterrés. Le rotor peut être à concentration de flux. Il peut comporter une ou plusieurs couches d'aimants disposées en I, en U ou en V. En variante, il peut s'agir d'un rotor bobiné ou à cage d'écureuil, ou d'un rotor à réluctance variable.

Le diamètre du rotor peut être inférieur à 400 mm, mieux inférieur à 300 mm, et supérieur à 50 mm, mieux supérieur à 70 mm, étant par exemple compris entre 100 et 200 mm.

Le rotor peut comporter une masse rotorique s'étendant selon l'axe de rotation et disposée autour d'un arbre. L'arbre peut comporter des moyens de transmission de couple pour l'entraînement en rotation de la masse rotorique.

Le rotor peut être monté en porte à faux ou non.

La machine peut être insérée seule dans un carter ou insérée dans un carter de boite de vitesse. Dans ce cas, elle est insérée dans un carter qui loge également une boite de vitesse.

### Procédé de fabrication

L'invention a encore pour objet, indépendamment ou en combinaison avec ce qui précède, un procédé de fabrication d'un stator de machine électrique tournante, notamment d'un stator tel que défini plus haut, dans lequel on dispose des conducteurs électriques dans les encoches d'une masse statorique du stator en les introduisant dans les encoches correspondantes par l'une ou les deux extrémités axiales du stator.

Au moins un conducteur électrique, voir une majorité des conducteurs électriques, introduit dans les encoches, sont en forme d'épingle en U. Ils peuvent être mis en forme en épingle préalablement à leur introduction dans les encoches. Tous les conducteurs électriques en forme d'épingle en U peuvent être mis en forme, simultanément ou successivement, puis introduit dans la masse statorique simultanément ou successivement.

La mise en forme peut comporter une première étape d'assemblage des brins d'un même conducteur électrique.

Une deuxième étape de mise en forme peut être mise en œuvre après leur introduction dans les encoches. Il peut s'agir notamment de l'inclinaison des portions de soudage.

On peut disposer un même conducteur électrique en forme de U dans deux encoches différentes non consécutives de la masse statorique du stator. Dans le cas où un conducteur électrique est en forme de U, il peut être soudé à deux autres conducteurs électriques d'un même côté de la machine.

### Brève description des dessins

L'invention pourra être mieux comprise à la lecture de la description détaillée qui va suivre, d'exemples de réalisation non limitatifs de celle-ci, et à l'examen du dessin annexé, sur lequel :
[Fig 1] La figure 1 est une vue en perspective, schématique et partielle, d'un stator réalisé conformément à l'invention.
[Fig 2] La figure 2 est une vue en perspective, schématique et partielle, du stator de la figure 1.
[Fig 3] La figure 3 une vue de détail, en perspective, du stator de la figure 1.
[Fig 4a] La figure 4a est vue en perspective, schématique et partielle, des conducteurs électriques d'une phase du stator de la figure 1.
[Fig 4b] La figure 4b est vue en perspective, schématique et partielle, des conducteurs électriques d'une phase du stator de la figure 1.
[Fig 4c] La figure 4c est vue en perspective, schématique et partielle, des conducteurs électriques d'une phase du stator de la figure 1.
[Fig 5a] La figure 5a est vue en perspective, schématique et partielle, d'un conducteur électrique du stator de la figure 1.
[Fig 5b] La figure 5b est vue en perspective, schématique et partielle, de deux conducteurs électriques du stator de la figure 1.
[Fig 6] La figure 6 en est une vue analogue à la figure 1 d'une variante de réalisation.
[Fig 7] La figure 7 est une vue en perspective, schématique et partielle, du stator de la figure 6.
[Fig 8] La figure 8 est une vue de dessus, schématique et partielle, du stator de la figure 6.
[Fig 9] La figure 9 est une vue de dessus, analogue à la figure 8, du bobinage du stator de la figure 6.
[Fig 10] La figure 10 est une vue de détail, en perspective, du stator de la figure 6.
[Fig 11] La figure 11 est une vue de détail, en perspective, du bobinage du stator de la figure 6.
[Fig 12] La figure 12 est vue en perspective, schématique et partielle, des conducteurs électriques d'une phase du stator de la figure 6.
[Fig 13a] La figure 13a est vue en perspective, schématique et partielle, d'un conducteur électrique du stator de la figure 6.
[Fig 13b] La figure 13b est vue en perspective, schématique et partielle, du même conducteur électrique du stator de la figure 6.
[Fig 13c] La figure 13c est vue en perspective, schématique et partielle, de deux conducteurs électriques du stator de la figure 6.

### Description détaillée

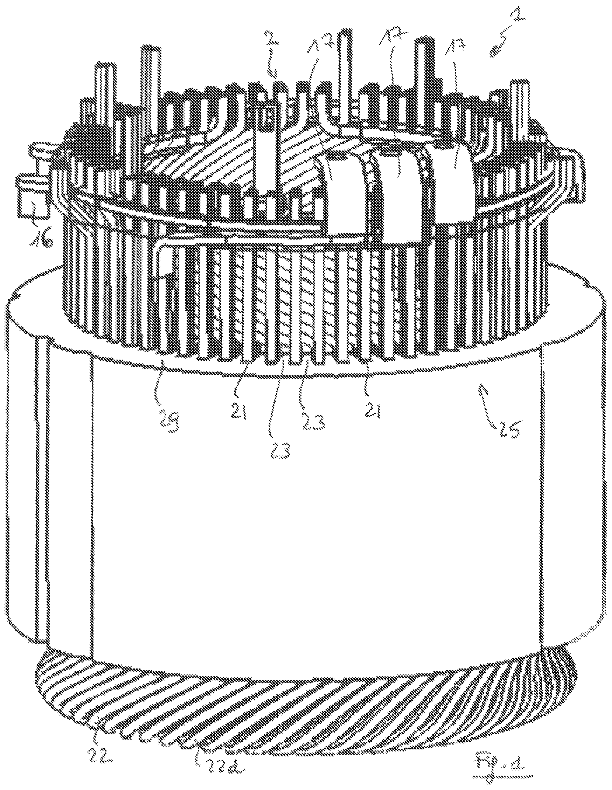

On a illustré aux figures 1 à 5b un stator 2 d'une machine électrique tournante 1 comportant également un rotor non représenté. Le stator permet de générer un champ magnétique tournant d'entraînement du rotor en rotation, dans le cadre d'un moteur synchrone, et dans le cas d'un alternateur, la rotation du rotor induit une force électromotrice dans les conducteurs électriques du stator.

Les exemples illustrés ci-dessous sont schématiques et les dimensions relatives des différents éléments constitutifs n'ont pas été nécessairement respectées.

Le stator 2 comporte des conducteurs électriques 22, lesquels sont disposés dans des encoches 21 ménagées entre des dents 23 d'une masse statorique 25. Les encoches 21 sont fermées. Les encoches 21 sont fermées du côté de l'entrefer par des ponts de matière 27, reliant chacun deux dents consécutives de la masse statorique 25, et du côté opposé par une culasse 29. Cette dernière et les dents 23 sont d'un seul tenant. Les conducteurs électriques 22 peuvent être pour la plupart d'entre eux en forme d'épingles, à savoir de U ou de I, et s'étendant axialement dans les encoches.

Dans l'exemple décrit, tous les conducteurs électriques 22 du stator 2 sont identiques, étant tous en forme d'épingle en U, avec un même pas Np pour tous les conducteurs électriques du stator qui sont en forme d'épingle en U. Chaque conducteur électrique en forme d'épingle en U comporte des première 22e et seconde 22f jambes s'étendant axialement respectivement dans des première A et seconde R encoches. Les première A et seconde R encoches sont séparées par un nombre Np d'encoches et par un nombre Nd de dents. Le nombre Np d'encoches est le même pour tous les conducteurs électriques en forme d'épingle en U du stator. Dans l'exemple décrit, Np vaut 11. Le nombre Nd de dents est le même pour tous les conducteurs électriques en forme d'épingle en U du stator. Dans l'exemple décrit, Nd vaut 10.

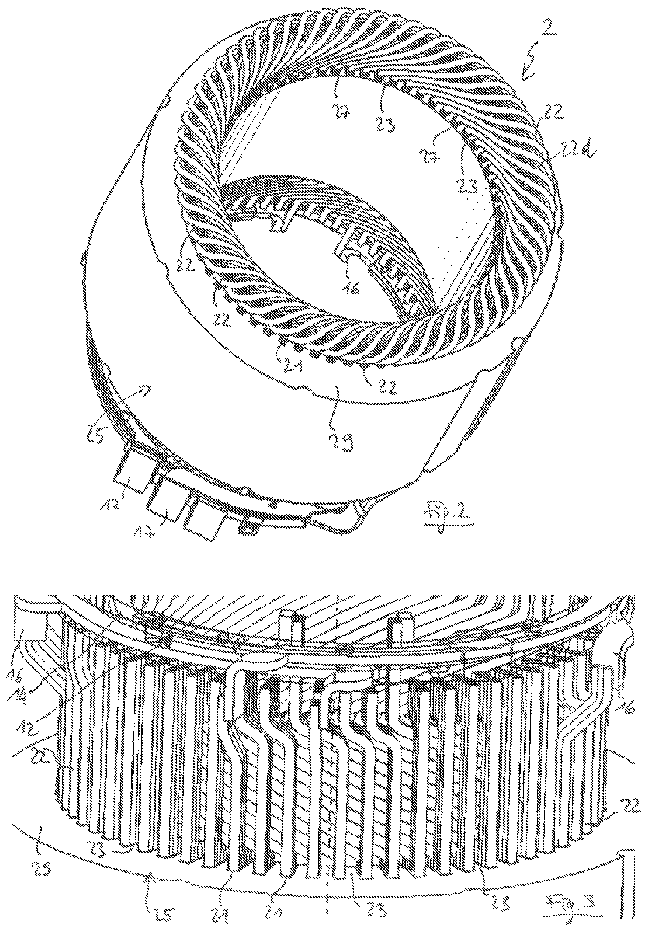

Compte tenu de l'écartement constant entre les jambes de tous les conducteurs électriques 22, l'invention permet de diminuer la hauteur des chignons 22d du côté opposé aux soudures, comme visible sur la figure 2, ainsi que d'avoir un écartement plus régulier entre chacun des chignons 22d.

On libère également de l'espace de part et d'autre des épingles en sortie d'encoche, ce qui peut permettre d'y positionner les connexions aux autres phases ou vers un onduleur, du côté de la culasse du stator, comme illustré sur les figures 1 et 3.

Le stator peut comporter à cet effet un connecteur de phases 12 comportant des éléments métalliques 16 connectés à des conducteurs électriques 22 du stator. Les éléments métalliques 16 sont disposés radialement extérieurement par rapport aux conducteurs électriques 22 auxquels ils sont connectés. Les éléments métalliques 16 connectés à des conducteurs sont maintenus par un support isolant 14. Par ailleurs, le connecteur de phases peut présenter des pattes de connexion à un bus d'alimentation. La machine 1 peut ainsi être reliée à un onduleur non représenté, connecté électriquement aux pattes de connexion 17 du connecteur 12.

Dans l'exemple décrit, un premier conducteur électrique logé dans une première encoche est relié électriquement à un deuxième conducteur électrique logé dans une deuxième encoche, à la sortie desdites encoches. Les première et deuxième encoches sont non consécutives. Dans l'exemple illustré, elles sont séparées par 12 autres encoches et par 11 dents. En variante, les première et deuxième encoche sont séparées par 3, 4, 5, 6, 7, 8, 9, 10, 11 ou 13 autres encoches, par exemple, et par 2, 3, 4, 5, 6, 7, 8, 9, 10, 12 ou 13 dents.

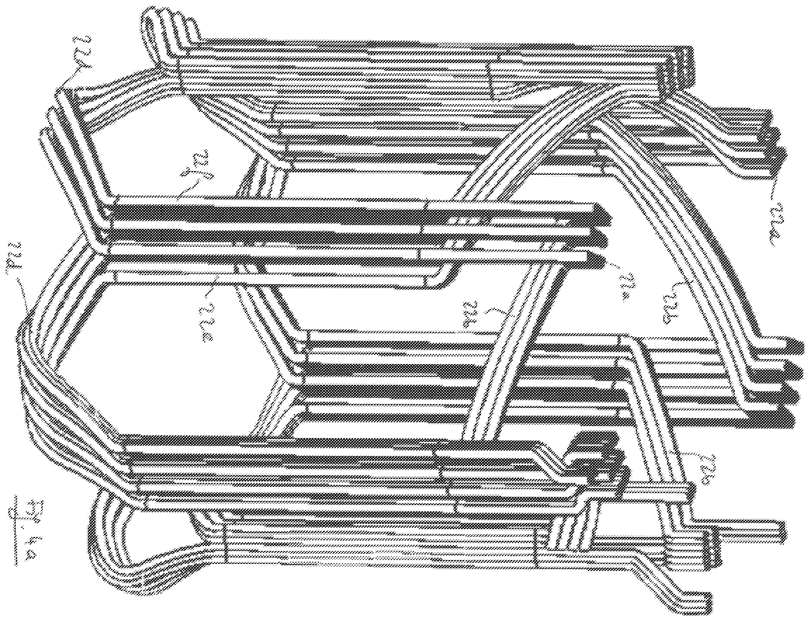

On voit en particulier sur les figures 4a à 4c les surfaces d'extrémité 22a des conducteurs électriques destinées à recevoir la liaison électrique. La liaison électrique est faite dans un plan perpendiculaire à l'axe de rotation de la machine. Le plan de la liaison électrique peut être éloigné de la masse statorique de 40 à 60 mm.

Les conducteurs électriques sont disposés dans les encoches de manière répartie, et ils forment un bobinage distribué, qui est dans l'exemple décrit fractionnaire. Dans cet exemple, le nombre d'encoches est de 63. Le nombre de pôles du stator est de 6. Ainsi, la combinaison nombre d'encoches/nombre de pôles du stator est de 63/6.

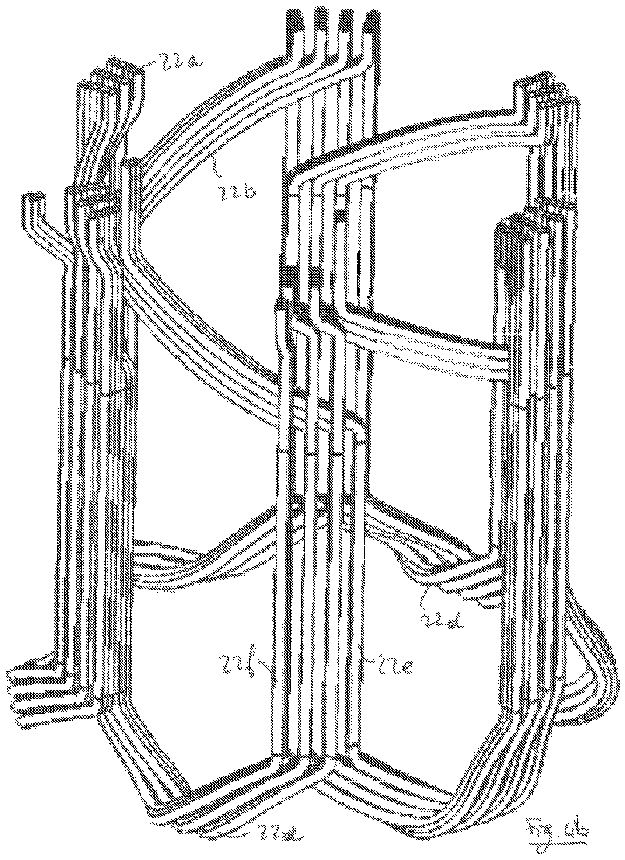

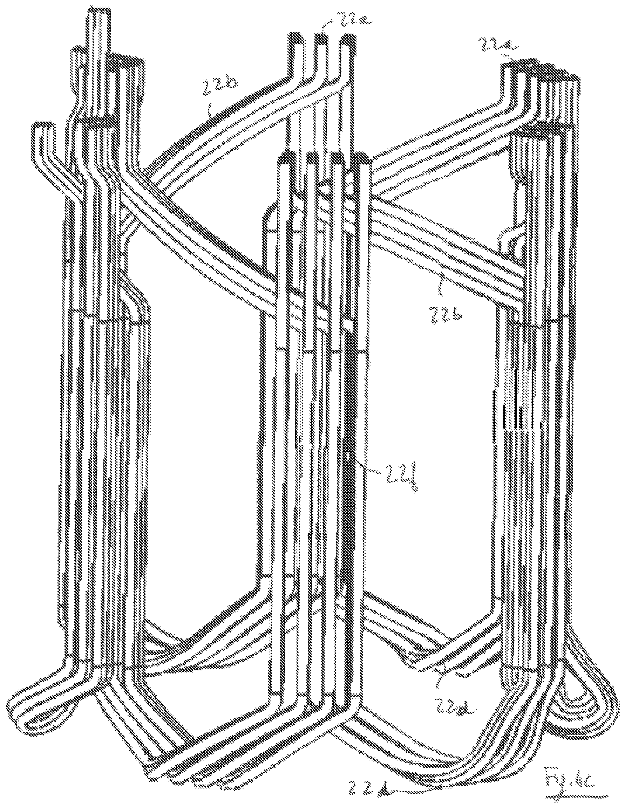

Les conducteurs électriques forment un bobinage fractionnaire, pour lequel le rapport *q* défini par *q=Ne*/*(2pm)* s'écrit sous la forme d'une fraction irréductible *z*/*n*, *z* et *n* étant deux nombres entiers non nuls, *n* étant différent de 1, où Ne est le nombre d'encoches du stator, *m* le nombre de phases du bobinage et *p* le nombre de paires de pôles du stator. On voit notamment sur la figure 4 isolément une bobine d'une phase dans le cas d'un bobinage fractionnaire triphasé. On a alors q=63/(3×6)=7/2 pour cette machine à 63 encoches et 6 pôles. Une bobine est formée par les conducteurs électriques aller d'une même phase passant dans des encoches adjacentes, et par les conducteurs électriques retours d'une même phase passant dans des encoches adjacentes.

Les conducteurs électriques 22 sont en cuivre ou aluminium, ou tout autre matériau conducteur émaillé ou revêtu de tout autre revêtement isolant adapté.

Les conducteurs électriques 22 sont disposés de manière rangée dans les encoches 21, selon une rangée de conducteurs électriques alignés.

Les conducteurs électriques peuvent être en section transversale de forme générale rectangulaire, notamment avec des coins arrondis. Ils sont dans l'exemple décrit superposés radialement en une seule rangée. La dimension circonférentielle d'un conducteur électrique correspond sensiblement à la largeur d'une encoche. Ainsi, l'encoche ne comporte dans sa largeur qu'un seul conducteur électrique. Elle peut comporter plusieurs conducteurs électriques dans sa dimension radiale. Elle en comporte deux dans l'exemple décrit.

Par ailleurs, les conducteurs électriques en épingles ont chacun des première 22e et seconde 22f jambes qui se prolongent hors des encoches par une portion de soudage 22b inclinée par rapport à un plan perpendiculaire à un axe longitudinal du stator pour venir en surplomb de la masse statorique circonférentiellement au niveau d'une encoche, cette encoche étant séparées de la première A ou de la seconde R encoche respectivement par un nombre N1 et/ou N2 de dents.

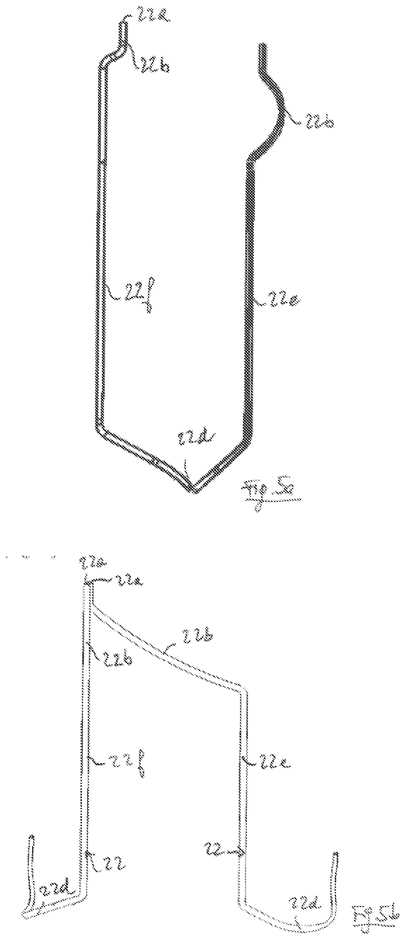

Dans l'exemple décrit en référence aux figures 1 à 5b, on a la portion de soudage 22b de la seconde jambe 22f du conducteur électrique 22 qui est alignée avec celle-ci, comme bien visible sur la figure 5b. Dans ce cas, on a N2 qui est nul. La première jambe 22e est disposée plus près du rotor que la seconde jambe 22f. La seconde jambe 22f est disposée plus près de la culasse du stator que la première jambe 22e. Ainsi, dans cet exemple, on a N1 qui vaut 11.

Pour chaque conducteur électrique, la portion de soudage 22b la plus intérieure par rapport à l'axe longitudinal du stator, qui est disposée plus près du rotor, est inclinée avec une même inclinaison par rapport au plan perpendiculaire à l'axe longitudinal du stator que les autres portions de soudage les plus intérieures.

Pour chaque conducteur électrique, la portion de soudage la plus extérieure par rapport à l'axe longitudinal du stator, qui est disposée plus loin du rotor, est inclinée avec une inclinaison qui peut être différente par rapport au plan perpendiculaire à l'axe longitudinal du stator que les autres portions de soudage les plus extérieures. Les portions de soudage les plus extérieures ne sont pas nécessairement toutes inclinées avec une même inclinaison par rapport au plan perpendiculaire à l'axe longitudinal du stator. Elles peuvent être inclinées avec au moins deux, voire trois ou quatre, inclinaisons différentes par rapport au plan perpendiculaire à l'axe longitudinal du stator.

Entre deux portions de soudage 22b rectilignes de deux secondes jambes 22f consécutives de deux conducteurs électriques 22 adjacents, on peut disposer par exemple une sonde de température ou tout autre capteur, les deux portions de soudage étant bien espacées. Dans un mode de réalisation, le capteur peut être enfilé sur le conducteur électrique rectiligne avant le soudage de celui-ci.

Par ailleurs, le conducteur électrique illustré à la figure 5a a une seconde jambe 22f se prolongeant hors de l'encoche par une portion de soudage 22b faisant un décrochement par rapport à l'encoche, tout en s'étendant dans un même plan radial que la seconde jambe. Cette portion de soudage 22b est radialement encore plus éloignée de l'axe de rotation de la machine. Ce décrochement du conducteur électrique permet d'atteindre les éléments métalliques 16 du connecteur de phases 12.

Bien entendu, on ne sort pas du cadre de la présente invention si les valeurs des nombres N1 et N2 sont différentes ou égales. Dans l'exemple qui vient d'être décrit, N1 est égal à Nd et N2 est égale à 0. N1 et N2 peuvent être égaux ou sensiblement égaux, étant égale à Nd/2 ou Nd/2 + 0,5 ou Nd/2 - 0,5 ou Nd/2 +/- 1 ou Nd/2 + 1,5, en fonction de la valeur de Nd.

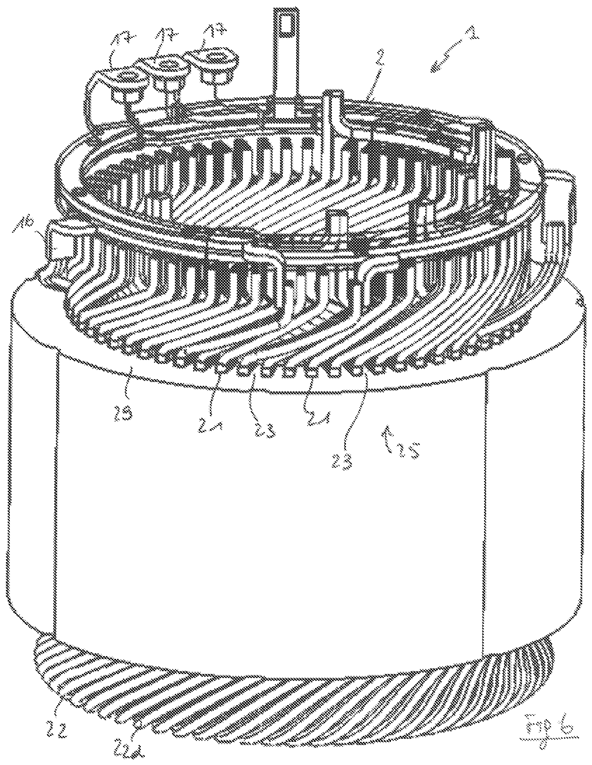

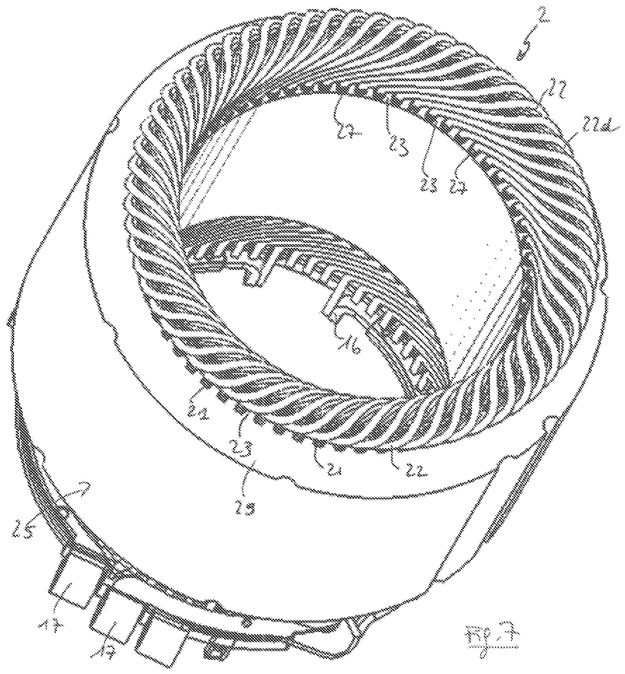

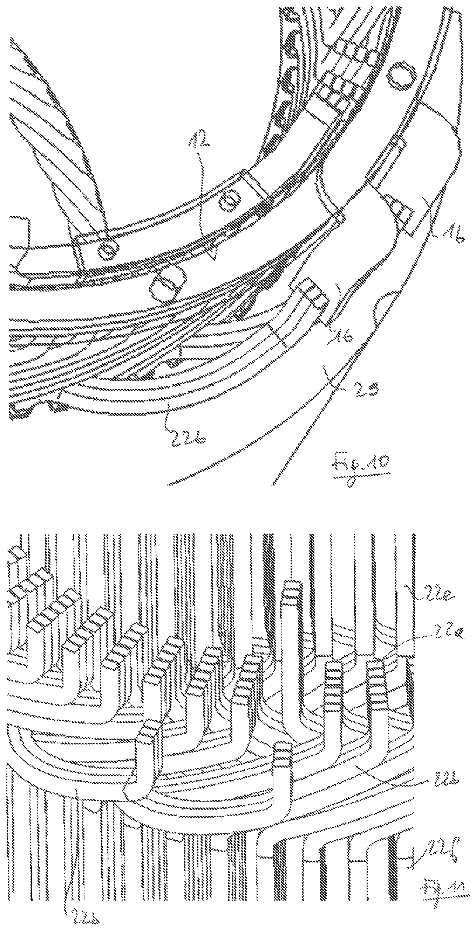

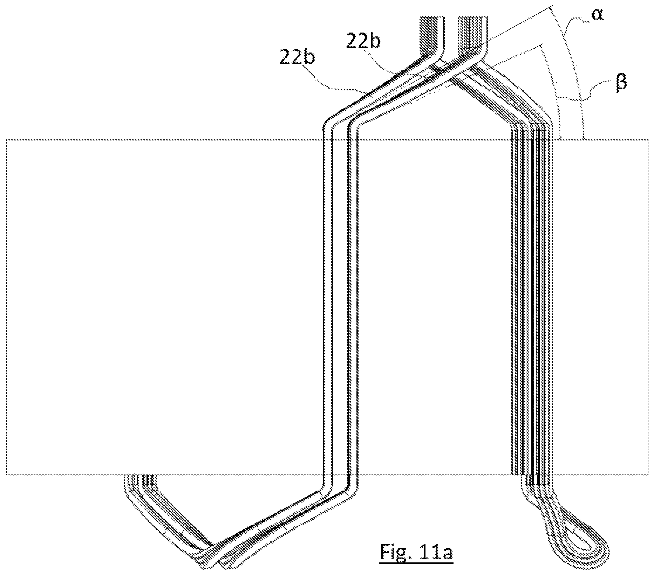

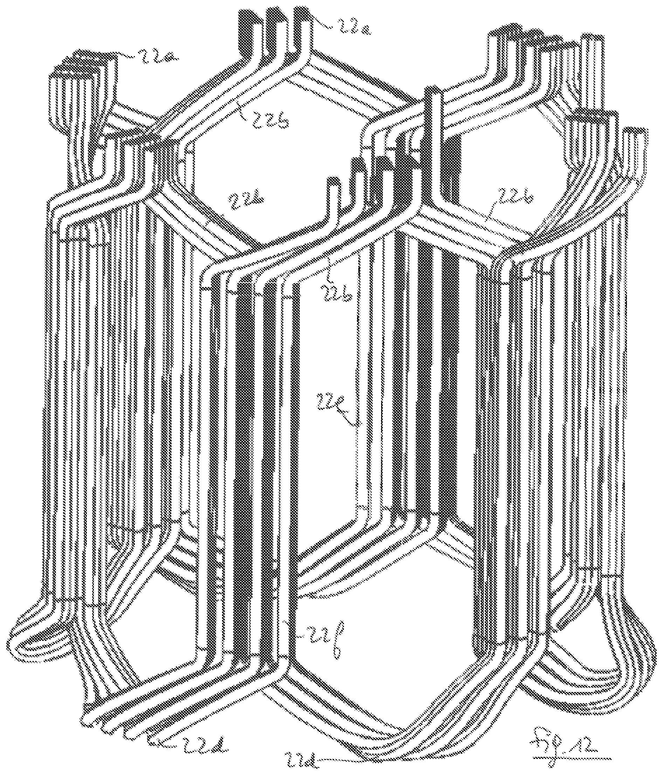

Dans l'exemple de réalisation illustré aux figures 6 à 13c, les nombre N1 et N2 sont sensiblement égaux. Dans l'exemple illustré, Np étant égal à 11 et Nd à 10, N1 vaut 6 et N2 vaut 5. Pour certains conducteurs électriques en épingles, N2 peut être égale à 6, notamment dans le cas où ce conducteur électrique est connecté aux éléments métalliques 16 du connecteur de phase 12.

Chacune des première 22e et seconde 22f jambes des conducteurs électriques 22 se prolongent hors des encoches par une portion de soudage 22b inclinée par rapport à un plan perpendiculaire à un axe longitudinal du stator pour venir en surplomb de la masse statorique circonférentiellement au niveau d'une encoche, cette encoche étant séparées de la première A ou de la seconde R encoche respectivement par un nombre N1 et N2 d'encoches.

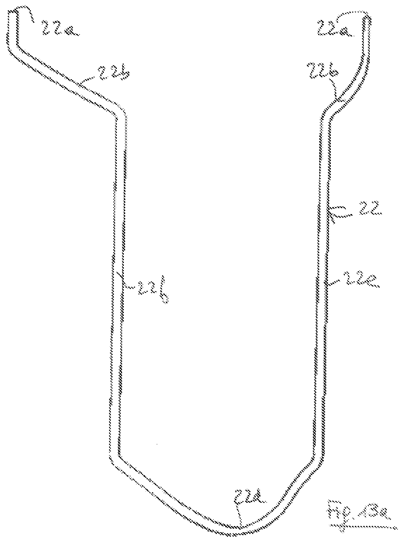

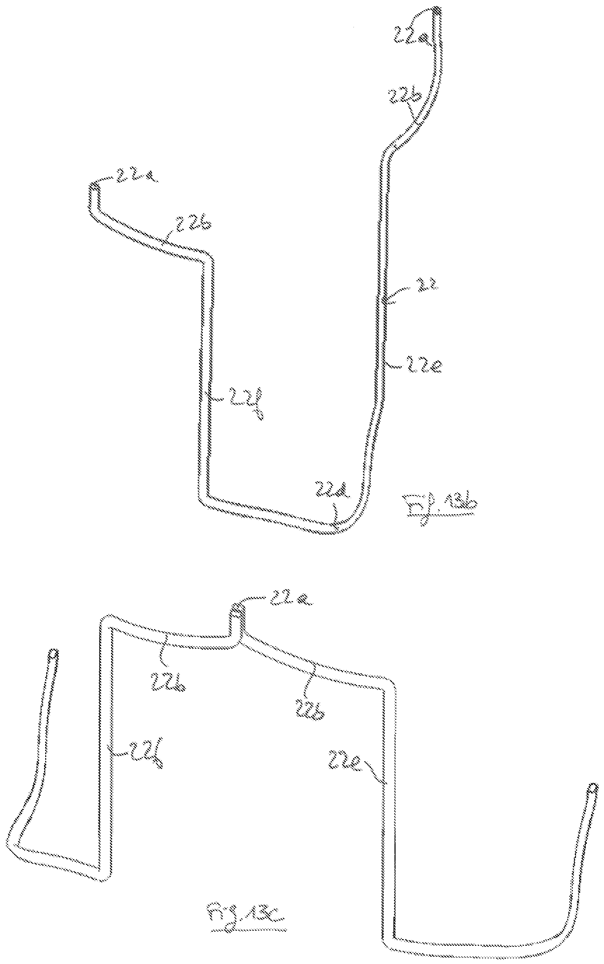

Dans l'exemple décrit, comme illustré sur les figures 13a à 13c, les deux portions de soudage 22b de chacune des première 22e et seconde 22f jambes des conducteurs électriques22 sont orientées en éloignement l'un de l'autre.

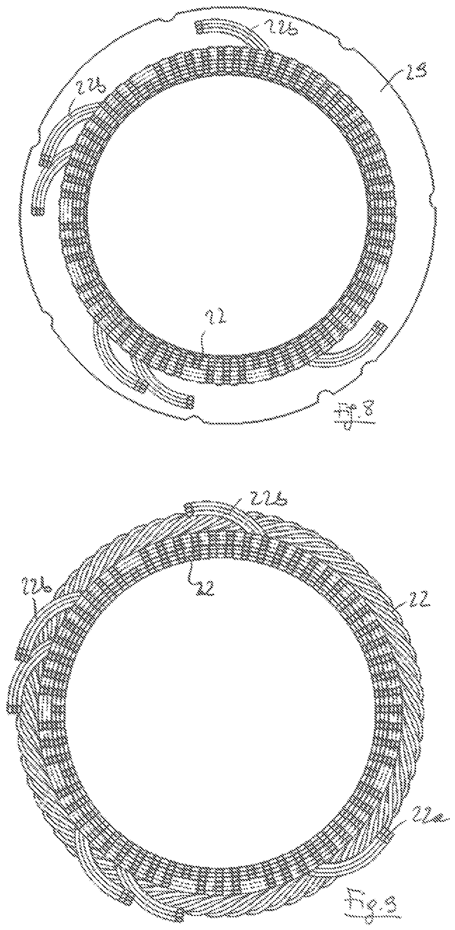

Par ailleurs, la plupart des conducteurs électriques 22 ont une seconde jambe 22f se prolongeant hors de l'encoche par une portion de soudage 22b s'étendant circonférentiellement, tandis que certains conducteurs électriques 22 ont une seconde jambe 22f se prolongeant hors de l'encoche par une portion de soudage 22b s'étendant en dehors d'une surface circonférentielle, comme bien visible sur les figures 8 et 9. Les portions de soudage 22b en dehors d'une surface circonférentielle peuvent permettre d'atteindre un connecteur de phase qui peut être disposé autour des portions de soudage, plutôt qu'au-dessus, relativement à un axe longitudinal du stator, comme visible sur les figures 6, 10 et 11.

Dans une autre variante de réalisation, la machine pourrait comporter 60 encoches, 60 dents, 8 pôles, des conducteurs électriques en épingles ayant chacun des première 22e et seconde 22f jambes séparées par 8 autres encoches et par 7 dents. Dans cet exemple, N1 peut être compris entre 3 et 8 et N2 entre 0 et 4.

Dans les exemples qui précédent, le bobinage est ondulé. On ne sort pas du cadre de la présente invention lorsque le bobinage est imbriqué.

## Revendications

1. Stator (2) de machine électrique tournante (1), comportant une masse statorique (25) comportant des encoches (21) ménagées entre des dents (23), des conducteurs électriques (22) étant logés dans les encoches (21), au moins une partie des conducteurs électriques, voire une majorité des conducteurs électriques, étant en forme d'épingle en U, comportant chacun des première (22e) et seconde (22f) jambes s'étendant axialement respectivement dans des première (A) et seconde (R) encoches, au moins une des première (22e) et seconde (22f) jambes des conducteurs électriques (22) se prolongeant hors des encoches par une portion de soudage inclinée par rapport à un plan perpendiculaire à un axe longitudinal du stator pour venir en surplomb de la masse statorique circonférentiellement au niveau d'une encoche ou d'une dent, cette encoche ou dent étant séparées de la première (A) ou de la seconde (R) encoche respectivement par un nombre N1 et/ou N2 de dents,
au moins une partie des conducteurs électriques ayant chacun une portion de soudage la plus intérieure par rapport à l'axe longitudinal du stator, voire une majorité, mieux tous les conducteurs électriques ayant chacun une portion de soudage la plus intérieure par rapport à l'axe longitudinal du stator,
lesdites portions de soudage les plus intérieures étant inclinées avec une même inclinaison par rapport au plan perpendiculaire à l'axe longitudinal du stator, **caractérisé en ce que** les portions de soudage les plus extérieures des conducteurs électriques étant inclinées avec au moins deux, voire trois ou quatre, inclinaisons différentes par rapport au plan perpendiculaire à l'axe longitudinal du stator,
le stator comportant deux conducteurs électriques par encoche.

2. Stator selon la revendication précédente, la première jambe étant disposée plus près du rotor que la seconde jambe.

3. Stator selon l'une des deux revendications précédentes, au moins une partie des conducteurs électriques (22) ayant une seconde jambe (22f) se prolongeant hors de l'encoche par une portion de soudage s'étendant dans un même plan radial que la seconde jambe, voir étant alignée avec celle-ci.

4. Stator selon l'une quelconque des revendications précédentes, au moins une partie des conducteurs électriques (22) ayant une seconde jambe (22f) se prolongeant hors de l'encoche par une portion de soudage faisant un décrochement par rapport à l'encoche, tout en s'étendant dans un même plan radial que la seconde jambe.

5. Stator selon l'une quelconque des revendications précédentes, au moins une partie des conducteurs électriques (22) ayant une seconde jambe (22f) se prolongeant hors de l'encoche par une portion de soudage s'étendant circonférentiellement.

6. Stator selon l'une quelconque des revendications précédentes, au moins une partie des conducteurs électriques (22) ayant une seconde jambe (22f) se prolongeant hors de l'encoche par une portion de soudage s'étendant en dehors d'une surface circonférentielle.

7. Stator selon l'une quelconque des revendications précédentes, les première (A) et seconde (R) encoches étant séparées par un nombre Nd de dents, le nombre Nd de dents étant le même pour tous les conducteurs électriques (22) en forme d'épingle en U du stator.

8. Stator selon la revendication précédente, les conducteurs électriques (22) formant un bobinage distribué.

9. Stator selon l'une quelconque des revendications précédentes, les conducteurs électriques (22) logés dans les encoches (21) formant un bobinage multiphasé ayant au moins une première phase (a) et une deuxième phase (b), un conducteur électrique d'entrée (A) de la première phase (a) étant située dans une première encoche (numéro d'encoche 1), un ou plusieurs conducteurs électriques de la deuxième phase (b) étant situés dans une deuxième encoche (numéro d'encoche 2), la deuxième encoche suivant immédiatement la première encoche quand on se déplace circonférentiellement autour de l'axe de rotation de la machine, dans le sens de circulation du courant électrique autour de l'axe de rotation de la machine.

10. Stator selon l'une quelconque des revendications précédentes, la deuxième encoche comportant un ou plusieurs conducteurs électriques d'une même phase uniquement.

11. Stator l'une quelconque des revendications précédentes, au moins un premier conducteur électrique logé dans une première encoche étant relié électriquement à un deuxième conducteur électrique logé dans une deuxième encoche, à la sortie desdites encoches.

12. Stator selon l'une quelconque des revendications précédentes, dans lequel tous les conducteurs électriques (22) ayant une extrémité libre (22a) située à une même position circonférentielle autour de l'axe de rotation de la machine, quelle que soit leur position radiale, sont reliés électriquement ensemble.

13. Stator selon l'une quelconque des revendications précédentes, comportant un connecteur de phases (12) comportant des éléments métalliques (16) connectés à des conducteurs électriques du stator, les éléments métalliques étant disposés radialement extérieurement ou intérieurement par rapport aux conducteurs électriques auxquels ils sont connectés.

14. Machine électrique tournante (1) comportant un stator (2) selon l'une quelconque des revendications précédentes et un rotor.

## Patentansprüche

1. Stator (2) einer rotierenden elektrischen Maschine (1) mit einer Statormasse (25) mit Kerben (21) zwischen Zähnen (23), wobei in den Kerben (21) elektrische Leiter aufgenommen sind, wobei zumindest ein Teil der elektrischen Leiter oder die Mehrzahl der elektrischen Leiter Drähte, mit jeweils einem ersten (22e) und einem zweiten (22f) Schenkel, die sich axial in einen ersten (A) und einen zweiten (R) Schlitz erstrecken, wobei mindestens einer der ersten (22e) und zweiten (22f) Schenkel der elektrischen Leiter (22) sich aus den Nuten durch einen Schweißabschnitt erstreckt, der bezüglich einer Längsachse des Stators geneigt ist der Statormasse in Umfangsrichtung an einer Kerbe oder einem Zahn, wobei die Kerbe bzw. der Zahn von der ersten (A) bzw. zweiten (R) durch eine Anzahl von Zähnen N1 bzw./oder N2 getrennt ist, wobei mindestens ein Teil der elektrischen Leiter jeweils einen gegenüber der Längsachse des Stators innersten Schweißabschnitt aufweist, alle Elektrische Leiter, die jeweils einen Schweißabschnitt aufweisen, der in Bezug auf die Längsachse des Stators am innersten ist, wobei die innersten Schweißabschnitte mit mindestens zwei, drei oder vier Schrägen, die sich von der zur Längsachse des Stators senkrechten Ebene unterscheidenabgewinkeltsindgeneigt sindsind,
Der Stator hat zwei elektrische Leiter pro Kerbe.

2. Stator nach dem vorhergehenden Anspruch, wobei das erste Bein näher an dem Rotor als das zweite Bein angeordnet ist.

3. Stator nach einem der beiden vorhergehenden Ansprüche, wobei mindestens ein Teil der elektrischen Leiter (22) einen zweiten Schenkel (22f) aufweist, der sich aus der Kerbe durch einen Schweißabschnitt erstreckt, der sich in einer gleichen radialen Ebene wie der zweite Schenkel erstrecktund mit ausgerichtet ististdiesem.

4. Stator nach einem der vorhergehenden Ansprüche, wobei zumindest ein Teil der elektrischen Leiter (22) einen zweiten Schenkel (22f) aufweist, der sich aus der Kerbe durch einen Schweißabschnitt erstreckt, der gegenüber der Kerbe abnimmt.

5. Stator nach einem der vorhergehenden Ansprüche, wobei wenigstens ein Teil der elektrischen Leiter (22) einen zweiten Schenkel (22f) aufweist, der sich von dem Schlitz durch einen sich umfangsmäßig erstreckenden Schweißabschnitt erstreckt.

6. Stator nach einem der vorhergehenden Ansprüche, wobei zumindest ein Teil der elektrischen Leiter (22) einen zweiten Schenkel (22f) aufweist, der sich von der Kerbe durch einen Schweißabschnitt erstreckt, der sich außerhalb einer Umfangsfläche erstreckt.

7. Stator nach einem der vorhergehenden Ansprüche, wobei die erste (A) und die zweite (R) Kerbe durch eine Nd-Zahl von Zähnen getrennt sind, wobei die Nd-Zahl von Zähnen für alle U-förmigen elektrischen Leiter (22) des Stators gleich ist.

8. Stator nach dem vorhergehenden Anspruch, wobei die elektrischen Leiter (22) eine verteilte Wicklung bilden.

9. Stator nach einem der vorhergehenden Ansprüche, wobei die elektrischen Leiter (22) in den Kerben (21) angeordnet sind, die eine mehrphasige Wicklung mit mindestens einer ersten Phase (a) und einer zweiten Phase (b) bilden, wobei ein elektrischer Eingangsleiter (A) der ersten Phase (a) in einer ersten Kerbe (Kerbnummer 1) angeordnet ist, wobei einer oder mehrere elektrische Leiter der zweiten Phase (b) ist in einer zweiten Kerbe (Kerbnummer 2), wobei die zweite Kerbe unmittelbar nach der ersten Kerbe verläuft, wenn sie sich in Umfangsrichtung um die Drehachse der Maschine in Strömungsrichtung des elektrischen Stroms um die Drehachse der Maschine bewegt.

10. Stator nach einem der vorhergehenden Ansprüche, wobei die zweite Kerbe einen oder mehrere elektrische Leiter einer einzigen Phase aufweist.

11. Stator nach einem der vorhergehenden Ansprüche, wobei mindestens ein in einer ersten Kerbe aufgenommener erster elektrischer Leiter elektrisch mit einem in einer zweiten Kerbe aufgenommenen zweiten elektrischen Leiter am Ausgang der Kerben verbunden ist.

12. Stator nach einem der vorhergehenden Ansprüche, bei dem alle elektrischen Leiter (22) mit einem freien Ende (22a), das sich an einer gleichen Umfangsposition um die Drehachse der Maschine befindet, unabhängig von ihrer radialen Position elektrisch miteinander verbunden sind.

13. Stator nach einem der vorhergehenden Ansprüche, der einen Phasenverbinder (12) aufweist, der Metallelemente (16) aufweist, die mit elektrischen Leitern des Stators verbunden sind, wobei die Metallelemente radial außen oder innen angeordnet sind.

14. Rotierende elektrische Maschine (1) mit einem Stator (2) nach einem der vorhergehenden Ansprüche und einem Rotor.

## Claims

1. Stator (2) of rotating electric machine (1), having a static mass (25) with notches (21) lying between teeth (23), electrical conductors (22) housed in notches (21), at least part of the electric conductors, or even a majority of the electric conductors, being in the shape of a U pin, having each of the first (22e) and second (22f) legs extending axially in the first (A) and second (R) notches, respectively, at least one of the first (22e) and second (22f) legs of the electric conductors (22) extending out of the notches by a weld portion inclined to a plane perpendicular to a longitudinal axis of the stator to come overhanging the circumferential mass at the notch or tooth level, the notch or tooth being separated from the first (A) or the second (R) notched by an N1 and/or N2 number of teeth, respectively,
at least one part of the electrical conductors each with a weld portion that is the most inner than the longitudinal axis of the stator, or even a better majority, each electric conductor having one of the most inner soldering parts relative to the longitudinal axis of the stator, the said most inner soldering parts being inclined with the same inclination in relation to the plane perpendicular to the longitudinal axis of the stator, **characterized by** that the most outer soldering portions of the electric conductors being inclined with at least two, or even three or four, different inclines in relation to the plane perpendicular to the longitudinal axis of the stator,
the stator with two electrical conductors per notch.

2. Stator according to the previous claim, the first leg being placed closer to the rotor than the second leg.

3. Stator according to one of the two preceding claims, at least one part of the electric conductors (22) with a second leg (22f) extending out of the notch by a weld portion extending in the same radial plane as the second leg, see being aligned with the second leg.

4. Stator according to any of the previous claims, at least one part of the electric conductors (22) with a second leg (22f) extending out of the notch by a serving of welding that drops off the notch, while extending in the same radial plane as the second leg.

5. Stator according to any of the previous claims, at least one part of the electric conductors (22) with a second leg (22f) extending out of the notch by a weld portion extending circumferentially.

6. Stator according to any of the previous claims, at least one part of the electric conductors (22) with a second leg (22f) extending out of the notch by a weld portion extending out of a circumferential surface.

7. Stator according to any of the previous claims, the first (A) and second (R) notches are separated by an Nd number of teeth, the Nd number of teeth being the same for all electric conductors (22) in the shape of a U-pin of the stator.

8. Status according to the previous claim, electric conductors (22) forming a distributed winding.

9. Stator according to any of the preceding claims, electric conductors (22) housed in notches (21) forming a multiphase winding having at least one first phase (a) and a second phase (b), an electric input conductor (A) of the first phase (a) being located in a first notch (notch number 1), one or more electrical conductors of the second phase (b) being located in a second notch (notch number 2), the second notch immediately following the first notch when moving circumferentially around the machine's axis of rotation, in the direction of the electric current circulating around the machine's axis of rotation.

10. Status according to any of the previous claims, the second notch with one or more electric conductors of the same phase only.

11. Stator any of the preceding claims, at least one first electric conductor housed in a first notch being electrically connected to a second electric conductor housed in a second notch, at the exit of the said notches.

12. Stator according to any of the preceding claims, in which all electric conductors (22) with a free end (22a) located at the same circumferential position around the axis of rotation of the machine, regardless of their radial position, are electrically connected together.

13. Stator according to any of the preceding claims, including a phase connector (12) with metal elements (16) connected to electric conductors of the stator, the metal elements being arranged radially externally or internally in relation to the electrical conductors to which they are connected.

14. Turning electric machine (1) with a stator (2) according to any of the previous claims and a rotor.
